# EUROPÄISCHE PATENTSCHRIFT

(11) **EP 2 548 275 B1**
(45) Veröffentlichungstag und Bekanntmachung des Hinweises auf die Patenterteilung: **01.01.2014**
(21) Anmeldenummer: 11708794.0
(22) Anmeldetag: 10.03.2011
(51) Int. Cl.: H02H 11/00, F02N 11/08

(54) **BORDNETZ FÜR EIN FAHRZEUG**
ELECTRIC CIRCUIT OF A VEHICLE
RÉSEAU ÉLECTRIQUE POUR VÉHICULE

(30) Priorität: 13.03.2010 DE 102010011276
(43) Veröffentlichungstag der Anmeldung: 23.01.2013
(73) Patentinhaber: Continental Automotive GmbH, 30165 Hannover (DE)
(72) Erfinder: REICHOW, Dirk, 93173 Wenzenbach (DE); STECKERMEIER, Tobias, 92059 Regensburg (DE); GALLI, Tobias, 93426 Roding (DE)
(86) Internationale Anmeldenummer: PCT/EP2011/053575
(87) Internationale Veröffentlichungsnummer: WO 2011/113734

(56) Entgegenhaltungen:
- DE-A1- 3 930 091
- DE-A1- 10 001 485
- DE-A1- 10 222 149
- DE-A1-102005 015 993
- DE-A1-102006 036 425
- DE-A1-102007 027 498
- DE-C1- 4 138 943

## Beschreibung

Die Erfindung betrifft ein Bordnetz für ein Fahrzeug, insbesondere ein Kraftfahrzeug gemäß Oberbegriff des Patentanspruchs 1.

Bordnetze heutiger Kraftfahrzeuge umfassen einen als Drehstrommaschine mit nachgeschalteter Gleichrichterschaltung ausgebildeten Generator als Energiewandler, eine oder mehrere Energiespeichereinheiten, bspw. Batterien sowie über das Bordnetz zu versorgende elektrische Verbraucher. Ein Verpolungsschutz wird bei solchen Bordnetzen durch die Gleichrichterdioden einer nachgeschalteten Gleichrichterschaltung realisiert.

Darüber hinaus sind auch Bordnetze mit zwei Energiespeichersystemen mit unterschiedlichen Nominalspannungen als Systemspannungen ohne Potentialtrennung bekannt, so zum Bsp. ein Energiespeichersystem, bspw. eine 12V-Batterie für Normalverbraucher des Kraftfahrzeugs und ein weiteres Energiespeichersystem, bspw. bestehend aus Doppelschichtkondensatoren (Ultra -caps) für Hochstromverbraucher.

Ein Batteriemanagement für Energiefluß- und Ruhestrommanagement zwischen diesen beiden Energiespeichersystemen wird von einer Steuereinheit bzw. einem Steuergerät bewirkt, wobei diese Steuereinheit von der 12V-Batterie mit einer Betriebsspannung versorgt wird. Als Verpolschutz dient ein Ventil, bspw. eine Verpolschutzdiode, die die 12V-Batterie mit der Steuereinheit verbindet.

Die Druckschrift DE 10 2005 015993 A1 offenbart ein Bordnetz für ein Fahrzeug, insbesondere ein Kraftfahrzeug, umfassend eine erste Energiespeichereinheit mit einem ersten Spannungsniveau, eine zweite Energiespeichereinheit mit einem zweiten Spannungsniveau, eine Steuereinheit, die den Stromfluss zwischen der ersten Energiespeichereinheit und der zweiten Energiespeichereinheit steuert.

Weitere Druckschriften DE 41 38 943 Cl, DE 10 2006 036425 A1, DE 100 01 485 A1, DE 10 2007 027498 A1 beschreiben ebenfalls Bordnetz eines Fahrzeugs.

Nachteilig an einem solchen Bordnetz mit zwei Energiespeichersystemen ist ein Zustand, bei dem die Systemspannung der 12V-Batterie unter die Spannung der weiteren Energiespeichereinheit fällt und damit die Gefahr eines Ladungsabflusses in Richtung der 12V-Batterie aufgrund parasitärer Effekte in Halbleiter-Bauelementen der Steuereinheit besteht.

Aufgabe der Erfindung ist es daher, ein Bordnetz für ein Fahrzeug zu schaffen, bei dem ein solcher Ladungsabfluss verhindert wird.

Diese Aufgabe wird gelöst durch ein Bordnetz mit den Merkmalen des Patentanspruchs 1.

Hiernach ist bei einem Bordnetz für ein Fahrzeug, insbesondere ein Kraftfahrzeug, das
- eine erste Energiespeichereinheit mit einem ersten Spannungsniveau,
- eine zweite Energiespeichereinheit mit einem zweiten Spannungsniveau,
- eine Steuereinheit, die den Stromfluss zwischen der ersten Energiespeichereinheit und der zweiten Energiespeichereinheit in beiden Richtungen steuert, falls das zweite Spannungsniveau unter dem ersten Spannungsniveau liegt,
- eine Verpolschutzdiode, die die erste Energiespeichereinheit zur Betriebsspannungsversorgung mit der Steuereinheit verbindet, und
- ein Schaltelement zur Überbrückung der Verpolschutzdiode bei richtiger Polung der ersten Energiespeichereinheit umfasst,
   erfindungsgemäß vorgesehen, dass
- mittels einer Vergleichsschaltung, insbesondere eines Kompärators das erste Spannungsniveau mit dem zweiten Spannungsniveau verglichen wird, und
- mittels Steuermittel, vorzugsweise des Komparators bei Absinken des ersten Spannungsniveaus auf einen unter dem zweiten Spannungsniveau liegenden Spannungsschwellwert der steuerbare Schalter in seinen geöffneten Zustand gesteuert wird.

Damit wird in einfacher und überraschender Weise der Verpolschutz für die Steuereinheit auch zur Verhinderung eines unerwünschten Ladungsaustausches zwischen den beiden Energiespeichereinheiten erzielt. Insbesondere sind keine zusätzlichen Leistungsbauelemente erforderlich. Ferner ist gemäß einer Weiterbildung der Erfindung mittels des vorgeschlagenen Komparators eine leichte Einstellmöglichkeit des Spannungsschwellwertes möglich.

Weitere vorteilhafte Ausgestaltungen der Erfindung sind mit den Merkmalen der abhängigen Patentansprüche gegeben.

Die Erfindung wird nachfolgend unter Bezugnahme auf die beigefügten Figuren näher erläutert. Es zeigen:
- Figur 1: ein schematisches Blockschaltbild eines Ausführungsbeispiels des erfindungsgemäßen Bordnetzes für ein Kraftfahrzeug, und
- Figur 2: ein detailliertes Blockschaltbild des Bordnetzes gemäß Figur 1.

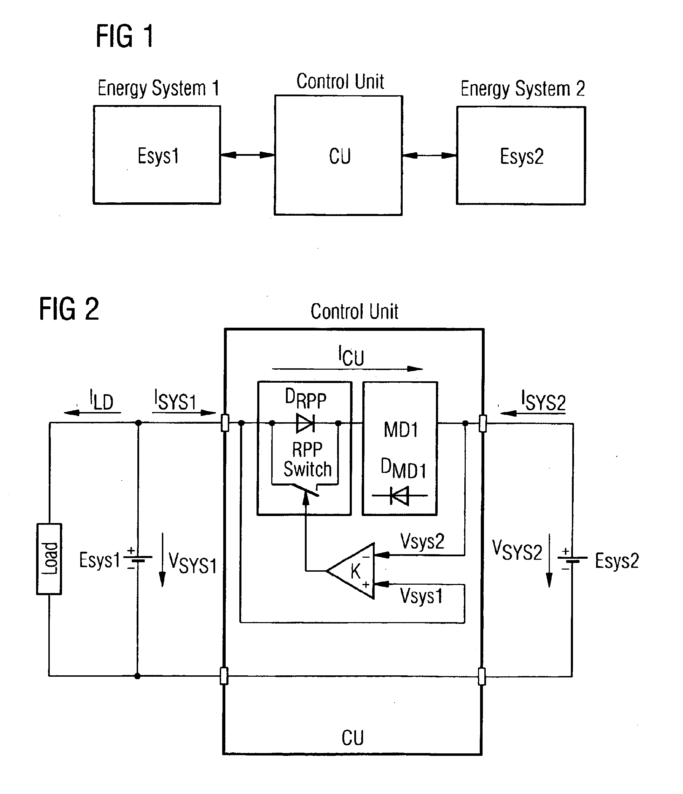

Figur 1 zeigt ein Bordnetz, bestehend aus einer ersten Energiespeichereinheit Esys1 mit einer Nominalspannung V_{SYS1}, hier eine 12V-Batterie und einer zweiten Energiespeichereinheit Esys2 mit einer Nominalspannung V_{SYS2}, die ebenfalls eine Batterie, ein Doppelschichtkondensator oder ein anderes Speichermedium sein kann.

Die Nominalspannung V_{SYS1} der ersten Energiespeichereinheit Esys1, also deren Systemspannung ist größer als die Nominalspannung V_{SYS2} bzw. Systemspannung der zweiten Energiespeichereinheit Esys2: V_{SYS1} > V_{SYS2}.

Eine Steuereinheit CU verbindet die beiden nicht potentialgetrennten Energiespeichereinheiten Esys1 und Esys2 und steuert den Energieaustausch im Sinne eines Energiemanagements zwischen diesen beiden Energiespeichereinheiten Esys1 und Esys2, d. h. im Nominalzustand der beiden Systemspannungen ist sowohl ein Energieaustausch von der ersten Energiespeichereinheit Esys1 in Richtung der zweiten Energiespeichereinheit Esys2 als auch umgekehrt, von der zweiten Energiespeichereinheit Esys2 in Richtung der ersten Energiespeichereinheit Esys1 möglich.

Gemäß der detaillierten Darstellung nach Figur 2 sind an die erste Energiespeichereinheit Esys1 elektrische Verbraucher des Kraftfahrzeug angeschlossen, dargestellt als Systemlast Load, die von einem Laststrom I_{LD} versorgt werden. Der von der Steuereinheit CU gemanagte Energieaustausch zwischen den beiden Energiespeichereinheiten Esys1 und Esys2 erfolgt mittels der Systemströme I_{SYS1} und I_{SYS2}. Bei diesem Ausführungsbeispiel sind die beiden Energiespeichersysteme Esys1 und Esys2 nicht potentialgetrennt.

Die erste Energiespeichereinheit Esys1 liefert auch die Betriebsspannungsversorgung für die Steuereinheit CU, der zugehörige Laststrom ist mit I_{CU} bezeichnet, wobei zwischen der ersten Energiespeichereinheit Esys1 und der Steuereinheit CU eine Verpolschutzschaltung RPP (Reverse Polarity Protection) geschaltet ist, die bspw. aus einer Verpolschutzdiode D_{RPP} besteht und von einem steuerbaren Schalter Switch, bspw. einem Transistor oder einem mechanischen Schalter, wie einem Relais kurzgeschlossen werden kann.

Dieser Schalter Switch wird von einer Vergleichsschaltung, hier ein Komparator K angesteuert. Hierzu wird die Spannung V_{SYS1} der ersten Energiespeichereinheit Esys1 dem nicht invertierenden Eingang des Komparators K und die Spannung Esys2 der zweiten Energiespeichereinheit Esys2 dem invertierenden Eingang des Komparators K zugeführt.

Befinden sich die beiden Systemspannungen V_{SYS1} und V_{SYS2} auf ihrem Nominalwert, d.h. gilt V_{SYS1} > V_{SYS2}, so wird der Schalter Switch durch entsprechende Steuerung des Komparators K geschlossen, d.h. der Transistor in seinen leitenden Zustand gesteuert. So dass die Verpolschutzdiode D_{RPP} überbrückt wird.

Falls die Spannung V_{SYS1} der ersten Energiespeichereinheit Esys1 also bspw. eine 12V-Batterie aufgrund einer starken Entladung auf einen Spannungsschwellwert V_{sch} absinkt, der unter dem Spannungswert der Spannung V_{SYS2} der zweiten Energiespeichereinheit Esys2 liegt, also wenn V_{SYS1} ≤ V_{sch} < V_{SYS2} gilt, wird der Schalter Switch von dem Komparator K in seinen geöffneten Zustand gesteuert, so dass aufgrund der Verpolschutzdiode D_{RPP} ein Ladungsabfluss aus der zweiten Energiespeichereinheit Esys2 in Richtung der ersten Energiespeichereinheit Esys1 verhindert wird.

Ein solcher Ladungsabfluss könnte aufgrund von parasitären Halbleiterelementen in der Steuereinheit CU entstehen, die in Figur 2 stellvertretend durch eine Diode D_{MD1} dargestellt sind. Ein solches parasitäres Halbleiterbauelement kann bspw. auch in einem von der Steuereinheit CU angesteuerten DC/DC-Wandler MD1 entstehen, bspw. als Bulk- oder Body-Diode eines High-Side-Transistors.

Der Spannungsschwellwert V_{sch} ist über die Steuereinheit CU einstellbar.

Falls die erste Energiespeichereinheit Esys1 mit falscher Polung an die Steuereinheit CU angeschlossen wird, ergibt sich für die Spannung V_{SYS1} der Energiespeichereinheit Esys1: V_{SYS1} < 0. Auch in diesem Zustand würde der Komparator K den Schalter Switch öffnen, d.h. den Transistor in seinen gesperrten Zustand steuern, so dass die Verpolschutzdiode D_{RPP} wirksam wird.

Der Komparator K kann mit einem zeitverzögerten Ansprechen ausgebildet werden, indem er bspw. mit einem Zeitglied verbunden wird. So erfolgt sowohl das Schließen des Schalters Switch als auch dessen Öffnen durch den Komparator K zeitverzögert.

Das oben erläuterte Ausführungsbeispiel zeigt ein erfindungsgemäßes Bordnetz ohne Potentialtrennung zwischen den beiden Energiespeichersystemen Esys1 und Esys2. Die Erfindung ist darauf natürlich nicht beschränkt, sondern kann ebenso für potentialgetrennte Systeme eingesetzt werden.

## Patentansprüche

1. Bordnetz für ein Fahrzeug, insbesondere ein Kraftfahrzeug umfassend
- eine erste Energiespeichereinheit (Esys1) mit einem ersten Spannungsniveau (V_{SYS1}),
- eine zweite Energiespeichereinheit (Esys2) mit einem zweiten Spannungsniveau (V_{SYS2}) ,
- eine Steuereinheit (CU), die den Stromfluss zwischen der ersten Energiespeichereinheit (Esys1) und der zweiten Energiespeichereinheit (Esys2) in beiden Richtungen steuert, falls das zweite Spannungsniveau (V_{SYS2}) unter dem ersten Spannungsniveau (V_{SYS1}) liegt,
- eine Verpolschutzdiode (D_{RPP}), die die erste Energiespeichereinheit (Esys1) zur Betriebsspannungsversorgung mit der Steuereinheit (CU) verbindet, und
- ein Schaltelement (Switch) zur Überbrückung der Verpolschutzdiode (D_{RPP}) bei richtiger Polung der ersten Energiespeichereinheit (Esys1), wobei
- mittels einer Vergleichsschaltung (K), insbesondere eines Komparators das erste Spannungsniveau (V_{SYS1}) mit dem zweiten Spannungsniveau (V_{SYS2}) verglichen wird, und
- mittels Steuermittel (K), vorzugsweise des Komparators bei Absinken des ersten Spannungsniveaus (V_{SYS1}) auf einen unter dem zweiten Spannungsniveau (V_{SYS2}) liegenden Spannungsschwellwert (V_{sch}) der steuerbare Schalter (Switch) in seinen geöffneten Zustand gesteuert wird.

2. Bordnetz nach Anspruch 1,
**dadurch gekennzeichnet, dass**
der Spannungsschwellwert (V_{sch}) einstellbar ist.

3. Bordnetz nach Anspruch 1 oder 2,
**dadurch gekennzeichnet, dass**
der Komparator (K) ein zeitverzögertes Ansprechverhalten aufweist.

4. Bordnetz nach einem der vorhergehenden Ansprüche,
**dadurch gekennzeichnet, dass**
der steuerbare Schalter (Switch) als Halbleiterschalter, insbesondere als Transistor oder als elektromechanischer Schalter ausgeführt ist.

5. Bordnetz nach einem der vorhergehenden Ansprüche,
**dadurch gekennzeichnet, dass**
das Bordnetz hinsichtlich der ersten und zweiten Energiespeichereinheit (Esys1, Esys2) ohne Potenzialtrennung ausgeführt ist.

6. Bordnetz nach einem der Ansprüche 1 bis 4,
**dadurch gekennzeichnet, dass**
das Bordnetz hinsichtlich der ersten und zweiten Energiespeichereinheit (Esys1, Esys2) mit Potenzialtrennung ausgeführt ist.

7. Bordnetz nach einem der vorhergehenden Ansprüche,
**dadurch gekennzeichnet, dass**
der erste Energiespeicher (Esys1) als Betriebsspannungsquelle für einen Laststromkreis mit elektrischen Verbrauchern (Load) dient.

8. Bordnetz nach einem der vorhergehenden Ansprüche,
**dadurch gekennzeichnet, dass**
das erste bzw. zweite Spannungsniveau (V_{SYS1}, V_{SYS2}) jeweils die Nominalspannung der ersten bzw. zweiten Energiespeichereinheit (Esys1, Esys2) ist.

9. Bordnetz nach einem der vorhergehenden Ansprüche,
**dadurch gekennzeichnet, dass**
die Steuereinheit (CU) mindestens ein elektrisches und/oder elektronisches Bauelement mit Durchlasseigenschaften umfasst.

10. Bordnetz nach einem der vorhergehenden Ansprüche,
**dadurch gekennzeichnet, dass**
die Steuereinheit (CU) ein Batteriemanagement durchführt.

## Claims

1. On-board electrical system for a vehicle, in particular a motor vehicle, comprising
- a first energy storage unit (Esys1) having a first voltage level (V_{SYS1}),
- a second energy storage unit (Esys2) having a second voltage level (V_{SYS2}),
- a control unit (CU), which controls the flow of current between the first energy storage unit (Esys1) and the second energy storage unit (Esys2) in both directions if the second voltage level (V_{SYS2}) is lower than the first voltage level (V_{SYS1}),
- a polarity-reversal protection diode (D_{RPP}) , which connects the first energy storage unit (Esys1) to the control unit (CU) for the purpose of supplying operating voltage, and
- a switching element (Switch) for bridging the polarity-reversal protection diode (D_{RPP}) when the polarity of the first energy storage unit (Esys1) is correct, wherein
- the first voltage level (V_{SYS1}) is compared with the second voltage level (V_{SYS2}) by means of a comparison circuit (K), in particular a comparator, and
- when the first voltage level (V_{SYS1}) falls to a voltage threshold value (V_{sch}) lying below the second voltage level (V_{SYS2}), the controllable switch (Switch) is controlled into the open state thereof, by means of control means (K), preferably of the comparator.

2. On-board electrical system according to Claim 1, **characterized in that** the voltage threshold value (V_{sch}) is adjustable.

3. On-board electrical system according to Claim 1 or 2,
**characterized in that**
the comparator (K) has a time-delayed response characteristic.

4. On-board electrical system according to one of the preceding claims,
**characterized in that**
the controllable switch (Switch) is designed as a semiconductor switch, in particular as a transistor, or as an electromechanical switch.

5. On-board electrical system according to one of the preceding claims,
**characterized in that**
the on-board electrical system is designed without potential isolation with respect to the first and second energy storage units (Esys1, Esys2).

6. On-board electrical system according to one of Claims 1 to 4,
**characterized in that**
the on-board electrical system is designed with potential isolation with respect to the first and second energy storage units (Esys1, Esys2).

7. On-board electrical system according to one of the preceding claims,
**characterized in that**
the first energy store (Esys1) is used as operating voltage source for a load circuit having electrical loads (Load).

8. On-board electrical system according to one of the preceding claims,
**characterized in that**
the first and second voltage levels (V_{SYS1}, V_{SYS2}) are in each case the nominal voltage of the first and second energy storage units (Esys1, Esys2) respectively.

9. On-board electrical system according to one of the preceding claims,
**characterized in that**
the control unit (CU) comprises at least one electrical and/or electronic component with conductive properties.

10. On-board electrical system according to one of the preceding claims,
**characterized in that**
the control unit (CU) manages the battery.

## Revendications

1. Système électrique embarqué pour un véhicule, en particulier un véhicule automobile, comprenant
- une première unité de stockage d'énergie (Esys1) dotée d'un premier niveau de tension (E_{SYS1}),
- une deuxième unité de stockage d'énergie (Esys2) dotée d'un deuxième niveau de tension (V_{SYS2}),
- une unité de commande (CU) qui commande le flux de courant entre la première unité de stockage d'énergie (Esys1) et la deuxième unité de stockage d'énergie (Esys2) dans les deux sens si le deuxième niveau de tension (V_{SYS2}) est inférieur au premier niveau de tension (V_{SYS1}),
- une diode de protection contre l'inversion de polarité (D_{RPP}) qui raccorde la première unité de stockage d'énergie (Esys1) à l'unité de commande (CU) pour l'alimentation en tension de service, et
- un élément de circuit (Switch) pour le pontage de la diode de protection contre l'inversion de polarité (D_{RPP}) en cas de polarisation correcte de la première unité de stockage d'énergie (Esys1),
- le premier niveau de tension (V_{SYS1}) étant comparé au deuxième niveau de tension (V_{SYS2}) au moyen d'un circuit de comparaison (K), en particulier d'un comparateur, et
- le commutateur (Switch) commandé étant commandé dans son état ouvert au moyen de moyens de commande (K), de préférence du comparateur, en cas de baisse du premier niveau de tension (V_{SYS1}) à une valeur de seuil de tension (V_{sch}) située sous le deuxième niveau de tension (V_{SYS2}).

2. Système électrique embarqué selon la revendication 1, **caractérisé en ce que**
la valeur seuil de tension (V_{sch}) est réglable.

3. Système électrique embarqué selon la revendication 1 ou 2,
**caractérisé en ce que**
le comparateur (K) présente un mode de réponse retardé.

4. Système électrique embarqué selon l'une quelconque des revendications précédentes,
**caractérisé en ce que**
le commutateur (Switch) commandable est réalisé en tant que commutateur à semi-conducteurs, en particulier en tant que transistor, ou en tant que commutateur électromécanique.

5. Système électrique embarqué selon l'une quelconque des revendications précédentes,
**caractérisé en ce que**
le système électrique embarqué, en ce qui concerne la première et la deuxième unités de stockage d'énergie (Esys1, Esyl2), est réalisé sans séparation de potentiel.

6. Système électrique embarqué selon l'une quelconque des revendications 1 à 4,
**caractérisé en ce que**
le système électrique embarqué, en ce qui concerne la première et la deuxième unités de stockage d'énergie (Esys1, Esyl2), est réalisé avec une séparation de potentiel.

7. Système électrique embarqué selon l'une quelconque des revendications précédentes,
**caractérisé en ce que**
la première unité de stockage d'énergie (Esys1) sert de source de tension de service pour un circuit de courant de charge avec consommateurs électriques (Load).

8. Système électrique embarqué selon l'une quelconque des revendications précédentes,
**caractérisé en ce que**
le premier ou le deuxième niveau de tension (V_{SYS1}, V_{SYS2}) est, respectivement, la tension nominale de la première ou de la deuxième unité de stockage d'énergie (Esys1, Esys2).

9. Système électrique embarqué selon l'une quelconque des revendications précédentes,
**caractérisé en ce que**
l'unité de commande (UC) comprend au moins un composant électrique et/ou électronique présentant des caractéristiques de transmission.

10. Système électrique embarqué selon l'une quelconque des revendications précédentes,
**caractérisé en ce que**
l'unité de commande (UC) effectue une gestion de batterie.
